(19)

Europäisches Patentamt

European Patent Office

Office européen des brevets

(11) **EP 4 518 178 A1**

(12) **EUROPEAN PATENT APPLICATION**
published in accordance with Art. 153(4) EPC

(43) Date of publication:
**05.03.2025 Bulletin 2025/10**

(21) Application number: **23796795.5**

(22) Date of filing: **26.04.2023**

(51) International Patent Classification (IPC):
**H04B 7/06** (2006.01)   **H04B 7/0408** (2017.01)
**H04B 7/0417** (2017.01)   **H04B 17/318** (2015.01)
**H04B 17/336** (2015.01)   **H04W 24/10** (2009.01)
**G06N 3/04** (2023.01)   **G06N 20/00** (2019.01)

(52) Cooperative Patent Classification (CPC):
**G06N 3/04; G06N 20/00; H04B 7/0408;**
**H04B 7/0417; H04B 7/06; H04B 17/318;**
**H04B 17/336; H04W 24/10**

(86) International application number:
**PCT/KR2023/005695**

(87) International publication number:
**WO 2023/211152 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2022 KR 20220053047**

(71) Applicant: **LG Electronics Inc.
Yeongdeungpo-gu
Seoul 07336 (KR)**

(72) Inventors:
• **GO, Seongwon
  Seoul 06772 (KR)**

• **KANG, Jiwon
  Seoul 06772 (KR)**
• **PARK, Haewook
  Seoul 06772 (KR)**
• **LEE, Youngdae
  Seoul 06772 (KR)**
• **KIM, Kijun
  Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **DEVICE AND METHOD FOR PERFORMING AI/ML-BASED BEAM MANAGEMENT IN WIRELESS COMMUNICATION SYSTEM**

(57)     A method of operating a user equipment (UE) in a wireless communication system is provided. The method comprises receiving a channel state information (CSI) resource configuration from a base station, receiving a plurality of CSI-reference signals (RSs) from the base station based on a plurality of first CSI-reference signal resource indicators (CRIs) or a plurality of first synchronization signal block resource indicators (SSBRIs) related to the CSI resource configuration, measuring a received signal received power (RSRP) or a signal to interference power (SINR) related to the first CRIs or the first SSBRIs, calculating a derivative value per time unit of the measured RSRP or SINR, selecting a predetermined number of second CRIs or second SSBRIs from among the first CRIs or the first SSBRIs based on an absolute value and the derivative value of the RSRP or the SINR, and transmitting, to the base station, a report message related to the second CRIs or the second SSBRIs. The report message includes the absolute value of the RSRP or the SINR related to the second CRIs or the second SSBRIs and the derivative value of the RSRP or the SINR related to the second CRIs or the second SSBRIs.

**(Cont. next page)**

EP 4 518 178 A1

【FIG. 7】

Start

Receive CSI resource configuration from base station — S3210

Receive a plurality of CSI-RSs from base station based on a plurality of first CRIs or a plurality of first SSBRIs related to CSI resource configuration — S3220

Measure RSRP or SINR related to first CRIs or first SSBRIs — S3230

Calculate derivative value per unit time of measured RSRP or SINR — S3240

Select a predetermined number of second CRIs or second SSBRIs from among first CRIs or first SSBRIs based on absolute value and derivative value of RSRP or SINR — S3250

Transmit report message related to second CRIs or second SSBRIs to base station — S3260

End

**Description**

[Technical Field]

The present disclosure relates to a device and method for performing artificial intelligence/machine learning (AI/ML) based beam management in a wireless communication system. More specifically, the present disclosure relates to a method for a user equipment (UE) to report information capable of mainly using as an input parameter of base station AI/ML and a device and method for performing a beam report through UE AI/ML in AI/ML based beam management in a wireless communication system.

[Background Art]

In 3GPP Rel-18 standardization, studies will be conducted with the aim of improving performance in communication between a base station (BS) and a user equipment (UE) using artificial intelligence (AI)/machine learning (ML). The three main use cases for evaluating performance improvement using the AI/ML have been presented to be CSI reporting, beam management, and positioning (see Rel-18 AI/ML SI objective below). In particular, in the beam management, sub-use cases are presented for beam prediction in time, and/or spatial domain for overhead and latency reduction, and beam selection accuracy improvement.

To list types of the AI/ML-based operation between the base station and the UE, they may be simply divided into a BS AI/ML operation, a UE AI/ML operation, and a BS-UE joint AI/ML operation. The present disclosure describes a method for a UE to report information capable of mainly using as an input parameter of BS AI/ML in AI/ML-based beam management and a beam reporting method through UE AI/ML. The present disclosure proposes a beam reporting operation of a UE for AI/ML-based beam management.

[Disclosure]

[Technical Problem]

In order to solve the above-described and other problems, the present disclosure provides a device and method for performing artificial intelligence/machine learning (AI/ML) based beam management in a wireless communication system.

The present disclosure provides a method for a user equipment (UE) to report information capable of mainly using as an input parameter of base station (BS) AI/ML and a device and method for performing a beam report through UE AI/ML in AI/ML based beam management in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided a method of operating a user equipment (UE) in a wireless communication system comprising receiving a channel state information (CSI) resource configuration from a base station, receiving a plurality of CSI-reference signals (RSs) from the base station based on a plurality of first CSI-reference signal resource indicators (CRIs) or a plurality of first synchronization signal block resource indicators (SSBRIs) related to the CSI resource configuration, measuring a received signal received power (RSRP) or a signal to interference power (SINR) related to the first CRIs or the first SSBRIs, calculating a derivative value per time unit of the measured RSRP or SINR, selecting a predetermined number of second CRIs or second SSBRIs from among the first CRIs or the first SSBRIs based on an absolute value and the derivative value of the RSRP or the SINR, and transmitting, to the base station, a report message related to the second CRIs or the second SSBRIs, wherein the report message includes the absolute value of the RSRP or the SINR related to the second CRIs or the second SSBRIs and the derivative value of the RSRP or the SINR related to the second CRIs or the second SSBRIs.

According to various embodiments of the present disclosure, there is provided a method of operating a base station in a wireless communication system comprising transmitting a channel state information (CSI) resource configuration to a user equipment (UE), transmitting a plurality of CSI-reference signals (RSs) to the UE based on a plurality of first CSI-reference signal resource indicators (CRIs) or a plurality of first synchronization signal block resource indicators (SSBRIs) related to the CSI resource configuration, and receiving, from the UE, a report message related to second CRIs or second SSBRIs which are a part of the first CRIs or the first SSBRIs, wherein the second CRIs or the second SSBRIs are a predetermined number of CRIs or SSBRIs selected based on an absolute value of a received signal received power (RSRP) or a signal to interference power (SINR) related to the first CRIs or the first SSBRIs and a derivative value per time unit of the RSRP or the SINR related to the first CRIs or the first SSBRIs from among the first CRIs or the first SSBRIs, and the report message includes the absolute value of the RSRP or the SINR related to the second CRIs or the second SSBRIs and the derivative value of the RSRP or the SINR related to the second CRIs or the second SSBRIs.

According to various embodiments of the present disclosure, there is provided a user equipment (UE) in a wireless communication system, the UE comprising a transceiver, at least one processor, and at least one memory operably connectable to the at least one processor and configured to store instructions performing operations based on being executed by the at least one processor, wherein the operations comprise all steps of a method of operating the UE according to various embodiments of the present disclosure.

According to various embodiments of the present disclosure, there is provided a base station in a wireless communication system, the base station comprising a transceiver, at least one processor, and at least one memory operably connectable to the at least one processor and configured to store instructions performing operations based on being executed by the at least one processor, wherein the operations comprise all steps of a method of operating the base station according to various embodiments of the present disclosure.

According to various embodiments of the present disclosure, there is provided a control device controlling a user equipment (UE) in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the UE according to various embodiments of the present disclosure.

According to various embodiments of the present disclosure, there is provided a control device controlling a base station in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating a user equipment (UE) according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating a base station according to various embodiments of the present disclosure.

[Advantageous Effects]

In order to solve the above-described and other problems, the present disclosure can provide a device and method for performing artificial intelligence/machine learning (AI/ML) based beam management in a wireless communication system.

The present disclosure can provide a method for a user equipment (UE) to report information capable of mainly using as an input parameter of base station (BS) AI/ML and a device and method for performing a beam report through UE AI/ML in AI/ML based beam management in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates an example of a concept related to deep learning based artificial intelligence (AI) in a system applicable to the present disclosure.
FIG. 2 illustrates an example of a structure of a feed-forward neural network (FFNN) as an example of a deep learning model in a system applicable to the present disclosure.
FIG. 3 illustrates an example of a structure of a recurrent neural network (RNN) as an example of a deep learning model in a system applicable to the present disclosure.
FIG. 4 illustrates an example of a structure of a convolution neural network (CNN) as an example of a deep learning model in a system applicable to the present disclosure.

FIG. 5 illustrates an example of a structure of an auto-encoder as an example of a deep learning model in a system applicable to the present disclosure.

FIG. 6 illustrates an example of a structure of a functional framework for radio access network (RAN) intelligence in a system applicable to the present disclosure.

FIG. 7 illustrates an example of an operation process of a UE in a system applicable to the present disclosure.

FIG. 8 illustrates an example of an operation process of a base station in a system applicable to the present disclosure.

FIG. 9 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

3GPP LTE, NR Specification

Hereinafter, downlink (DL) means communication from a base station (BS) to a terminal, and uplink (UL) means communication from the terminal to the base station. In downlink, a transmitter may be part of the base station, and a receiver may be part of the terminal. In uplink, the transmitter may be part of the terminal, and the receiver may be part of the base station. The base station may be expressed as a first communication device, and the terminal may be expressed as a second communication device. The base station may be replaced with terms including a fixed station, a Node B, an evolved-NodeB (eNB), a next generation NodeB (gNB), a base transceiver system (BTS), an access point (AP), a network (5G network), an artificial intelligence (AI) system/module, a road side unit (RSU), a robot, an unmanned aerial vehicle (UAV), an augmented reality (AR) device, a virtual reality (VR) device, and the like. Further, the terminal may be fixed or mobile and may be replaced with terms including a user equipment (UE), a mobile station (MS), a user terminal (UT), a mobile subscriber station (MSS), a subscriber station (SS), an advanced mobile station (AMS), a wireless terminal (WT), a machine-type communication (MTC) device, a machine-to-machine (M2M) device, and a device-to-device (D2D) device, a vehicle, a road side unit (RSU), a robot, an AI module, an unmanned aerial vehicle (UAV), an augmented reality (AR) device, a virtual reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity in the description, the following description will mostly focus on 3GPP communication system (e.g. LTE-A or 5G NR). However, technical features according to an embodiment of the present disclosure will not be limited only to this. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a detailed standard document number. The LTE/NR may be collectively referred to as the 3GPP system. For terms and techniques not specifically described among terms and techniques used in the present disclosure, reference may be made to a wireless communication standard document published before the present disclosure is filed. For example, the following document may be referred to.

3GPP LTE

- 36.211: Physical channels and modulation
- 36.212: Multiplexing and channel coding
- 36.213: Physical layer procedures
- 36.300: Overall description
- 36.331: Radio Resource Control (RRC)

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

Definition and Abbreviations

BM: beam management
CQI: channel quality indicator
CRI: CSI-RS (channel state information - reference signal) resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location

SINR: signal to interference and noise ratio

SSB (or SS/PBCH block): synchronization signal block (including primary synchronization signal, secondary synchronization signal and physical broadcast channel)

TDM: time division multiplexing

TRP: transmission and reception point

TRS: tracking reference signal

Tx: transmission

UE: user equipment

ZP: zero power

Technical Issue/Motivation of the present disclosure

In 3GPP Rel-18 standardization, studies will be conducted with the aim of improving performance in communication between a base station (BS) and a user equipment (UE) using artificial intelligence (AI)/machine learning (ML). The three main use cases for evaluating performance improvement using the AI/ML have been presented to be CSI reporting, beam management, and positioning. To list types of the AI/ML-based operation between the BS and the UE, they may be simply divided into a BS AI/ML operation, a UE AI/ML operation, and a BS-UE joint AI/ML operation. The present disclosure describes a method for a UE to report information capable of mainly using as an input parameter of BS AI/ML in AI/ML-based beam management and a beam reporting method through UE AI/ML.

The present disclosure proposes a beam reporting operation of a UE for AI/ML-based beam management.

The configuration, operation and other features of the present disclosure will be understood by the embodiments of the present disclosure described with reference to the accompanying drawings.

Hereinafter, downlink (DL) means communication from a base station (BS) to a terminal, and uplink (UL) means communication from the terminal to the base station. In downlink, a transmitter may be part of the base station, and a receiver may be part of the terminal. In uplink, the transmitter may be part of the terminal, and the receiver may be part of the base station. The base station may be expressed as a first communication device, and the terminal may be expressed as a second communication device. The base station may be replaced with terms including a fixed station, a Node B, an evolved-NodeB (eNB), a next generation NodeB (gNB), a base transceiver system (BTS), an access point (AP), a network (5G network), an artificial intelligence (AI) system/module, a road side unit (RSU), a robot, an unmanned aerial vehicle (UAV), an augmented reality (AR) device, a virtual reality (VR) device, and the like. Further, the terminal may be fixed or mobile and may be replaced with terms including a user equipment (UE), a mobile station (MS), a user terminal (UT), a mobile subscriber station (MSS), a subscriber station (SS), an advanced mobile station (AMS), a wireless terminal (WT), a machine-type communication (MTC) device, a machine-to-machine (M2M) device, and a device-to-device (D2D) device, a vehicle, a road side unit (RSU), a robot, an AI module, an unmanned aerial vehicle (UAV), an augmented reality (AR) device, a virtual reality (VR) device, and the like.

Specification Related Operation

Beam Management (BM)

The BM procedure, as layer 1 (L1)/layer 2 (L2) procedures for obtaining and maintaining a set of base station (e.g., gNB, TRP, etc.) and/or terminal (e.g., UE) beams available for downlink (DL) and uplink (UL) transmission/reception, may include the following procedures and terms.

- Beam measurement: operation for the base station or the UE to measure the characteristics of a received beamformed signal
- Beam determination: operation for the base station or the UE to select its transmit beam (Tx beam)/receive beam (Rx beam).
- Beam sweeping: operation of covering a space region using the Tx and/or Rx beam for a predetermined time interval in a predetermined manner.
- Beam report: operation for the UE to report information on a beamformed signal based on the beam measurement.

The BM procedure may be divided into (1) a DL BM procedure using synchronization signal (SS)/physical broadcast channel (PBCH) block or CSI-RS, and (2) an UL BM procedure using a sounding reference signal (SRS).

Further, each BM procedure may include Tx beam sweeping for determining the Tx beam and RX beam sweeping for determining the Rx beam.

Evolution of Beam Management Method

Rel-15 and Rel-16 Beam Management

<Background - UE Rx beam configuration/indication and UE Tx beam configuration/indication of BS>

A TCI state may be used to configure/indicate an Rx beam (i.e., spatial Rx parameter) to be used when a base station receives PDCCH and PDSCH from a UE using the quasi co-located (QCL) concept introduced in (Rel-15) NR (more specifically, when the base station receives DMRS of PDCCH and PDSCH from the UE). It may be indicated to use the Rx beam when receiving the DL RS configured as a reference upon the PDCCH or PDSCH reception by configuring/updating a DL reference signal (e.g., SSB-RI, CRI(P/SP/AP)) as a reference RS or a source RS of a QCL Type-D component through the TCI state.

In Rel-15 NR, spatialRelationInfo may be used to configure/indicate a Tx beam to be used when a base station transmits an UL channel to a UE. When the base station transmits PUCCH and SRS by configuring/updating a DL reference signal (i.e., SSB-RI, CRI(P/SP/AP)) or an SRS (i.e., SRS resource) as a reference RS for a target UL channel and/or a target RS via RRC configuration and/or MAC CE activation, the base station may indicate which UL Tx beam (i.e., spatial Tx parameter) is used. Further, when the base station schedules PUSCH to the UE, a Tx beam that is configured/updated/indicated by the base station and is used for SRS transmission (for CB or NCB usage) is indicated as a Tx beam for the PUSCH via an SRI field of UL grant DCI and is used as a PUSCH Tx beam of the UE.

<Background - Update for Rx/Tx beam of UE>

In Rel-15 NR, a TCI state configuration may be used to configure/indicate an Rx beam for target DL RS/channel. If the target DL RS/channel is CSI-RS, a UE Rx beam can be configured by configuring a QCL type-D RS at an RRC/MAC CE level (through TCI state ID configuration within a TCI state pool). If the target DL RS/channel is PDCCH, a specific TCI state ID is indicated via MAC CE after configuring up to 64 TCI state IDs to a specific CORESET, and thus the UE Rx beam can be configured, and the Rx beam of the corresponding CORESET can be updated through the same MAC CE massage. Further, for a PDSCH Rx beam, the PDSCH Rx beam can be indicated through the TCI indication upon DL scheduling by connecting up to 8 TCI state IDs to a TCI state field of DL DCI (within up to 128 TCI state pools) via MAC CE, and the PDSCH Rx beam can be updated by updating the TCI state IDs connected to the TCI state field through the same MAC CE massage.

In Rel-16 NR, in order to reduce the overhead of DL Rx beam configuration/indication, an operation between the base station and the UE that enables simultaneous TCI state ID activation in multiple CCs (BWPs) for PDCCH and PDSCH has been enhanced through the MAC CE message.

In Rel-15 NR, the Tx beam can be configured by connecting PUCCH-SpatialRelationInfoId to each PUCCH resource through the MAC CE message in order to configure/indicate the PUCCH Tx beam, and an MAC level for PUCCH-SpatialRelationInfo can be updated through the same MAC CE message. In addition, for the SRS, SRS-SpatialRelationInfo of SRS resources in a corresponding semi-persistent SRS resource set can be updated through the MAC CE message that activates transmission of SRS for SP-SRS.

In Rel-16 NR, in order to reduce latency of UL Tx beam configuration/indication, the operation between the BS and the UE has been enhanced to enable update of SRS-SpatialRelationInfo of SRS resources in a corresponding aperiodic SRS resource set through the MAC CE message for AP-SRS. Further, in the same manner as the DL Rx beam, the operation between the BS and the UE has been enhanced to enable the simultaneous update of spatial relation reference RSs in multiple CCs (BWPs) for the SP-SRS and the AP-SRS through the MAC CE message. In addition, by introducing the concept of a PUCCH resource group (per BWP), the operation between the BS and the UE has been enhanced to enable the simultaneous spatial relation update for PUSCH resources in the PUCCH resource group.

Rel-17 Beam Management

In NR Rel-15/Rel-16, higher layer signaling such as RRC and MAC CE is mainly used for a beam indication/update operation for reception/transmission between a BS and a UE, and a DCI based beam indication operation has been supported for some channels/RSs (PDSCH, PUSCH), etc. In Rel-17, a dynamic beam update operation using a joint DL/UL TCI state and a separate DL/UL TCI state is introduced, and the base station has standardized a UE common beam update operation that performs a common indication/update of a plurality of UE-specific channel/RS combinations to one beam by using DCI. Target channels/RSs of the common beam update may include UE-dedicated CORESET and UE-dedicated reception on PDSCH in the case of DL, and DG/CG-PUSCH and all or subset of dedicated PUCCHs in the case of UL. In adddition, AP CSI-RS for tracking/BM and SRS may be configured for the target channels/RSs.

In addition, as a method for supporting panel-specific UL transmission of the UE, standard discussions have been made on UE capability reporting operation and beam reporting operation for panel-related information as below. According to the following two agreements, one feature corresponds to the content agreed upon as a working assumption and is defined as a UE capability value set index (hereinafter referred to as C-ID for short), and how many C-IDs the UE has is reported to the UE as a UE capability report. The attribute to be included in the C-IDs agreed upon so far is the maximum number of SRS ports supported by the UE for each C-ID. That is, the C-ID is defined only for panel(s) with different SRS port numbers. Another feature is an operation of (instantaneous/periodic) report by including the C-IDs reported as the UE capability in the beam report as captured in the agreement. For convenience, this evolved reporting method will be hereinafter referred to as 'panel-specific beam report'. If the panel-specific beam report is configured/indicated, when the UE is configured/indicated with the existing beam report, RS indices (i.e., CRI or SSBRI) related to the best N BS Tx beams (where N is a value between 1 and 4 and is set by the base station) (regardless of UE Rx panel) are reported to the base station along with L1-RSRP or L1-SINR value which is a reception quality value of the corresponding RSs. The panel-specific beam report method will report the optimal C-ID (for each CRI/SSBRI) along with the L1-RSRP/L1-SINR(s) related to the CRI/SSBRI(s). Here, a mode for individually reporting C-ID for each CRI/SSBRI and/or a mode for reporting a single C-ID for all the CRIs/SSBRIs will be supported.

---

**Working Assumption**

Support the UE reporting a list of UE capability value sets

- Each UE capability value set comprises the max supported number of SRS ports
- For any two different value sets, at least one capability value needs to be different
  - ■ FFS: If in addition also identical value sets are allowed.
- Whether the UE capability value set can be common across all BWPs/CCs in same band or BC can be discussed in UE feature session

---

**Agreement**

On Rel.17 enhancements to facilitate UE -initiated panel activation and selection via UE reporting a list of UE capability value sets, the correspondence between each reported CSI-RS and/or SSB resource index and one of the UE capability value sets in the reported list is determined by the UE (analogous to Rel-15/16) and is informed to NW in a beam reporting instance.

- The Rel-15/16 beam reporting framework is used, i.e. the index of corresponding UE capability value set is reported along with the pair of SSBRI/CRI and L1-RSRP/SINR (up to 4 pairs, with 7-bit absolute and 4-bit differential) in the beam reporting UCI and down select (maintenance) between the following two-options:
  - ■ Option 1: UE can report one index for all the reported CRIs/SSBRIs in one beam reporting
  - ■ Option 2: UE can report one index for each reported CRI/SSBRI in one beam reporting.
  - ■ FFS: whether/how to take DL-only panel into account in the report
- FFS: Time-domain behaviour, e.g. the support periodic, semi-persistent, and aperiodic reporting
  - ■ FFS: Semi-persistent and/or aperiodic reporting is triggered only when periodic reporting is configured
- **(Working assumptions):** Support acknowledgement mechanism of the reported correspondence from NW to UE, which doesn't preclude reusing/reinterpreting existing signaling/procedure
  - ■ FFS (maintenance): the application time for the reported correspondence (if any), the exact acknowledgement mechanism and whether spec impact is needed, e.g. based on TCI state update, BFR response like mechanism, including the application time for the reported correspondence, if any
  - ■ No new DCI format and no new RNTI are introduced for this function.

---

In addition, in NR Rel-15/Rel-16, the power control configuration/indication for the UE of the base station is performed by configuration per UL channel/RS (i.e., PUSCH, PUCCH, SRS). As above, in Rel-17, with the enhancement to be able to indicate DL/UL Rx/Tx beams through the unified TCI (e.g., joint and/or separate DL/UL TCI) state, a method to configure/indicate UL power control parameters along with TCI state configuration/indication was discussed (see the agreement below).

---

**Agreement**

On path-loss measurement for Rel.17 unified TCI framework, a PL-RS (configured for path-loss calculation) is either included in UL TCI state or (if applicable) joint TCI state or associated with UL TCI state or (if applicable) joint TCI state.

- • Whether a UE supports "beam misalignment or not" (detailed definition FFS) between the DL source RS in the UL or (if applicable) joint TCI state to provide spatial relation indication and the PL-RS is a UE capability

---

| Agreement |
| --- |
| ◦ Note: The term "beam misalignment" is for discussion purpose only |
| • Whether it is 'included in' or 'associated with' (including the manner it is performed and the signaling) is up to RAN2 |
| • The UE maintains the PL-RS of the activated UL TCI state or (if applicable) joint TCI state |
| • The maximum number of activated UL TCI states or (if applicable) joint TCI states per band per cell is a UE capability |
| • FFS: detailed aspects of PL-RS, e.g. CSI-RS type(s), restriction on configuration |
| • FFS: For the definition of "beam misalignment or not", at least consider the case where the periodic DL source RS in the UL or (if applicable) joint TCI state to provide spatial relation indication is configured/associated as the PL-RS |
| • Note: PL-RS is assumed to be periodic |

| Agreement |
| --- |
| On the setting of UL PC parameters except for PL-RS (P0, alpha, closed loop index) for Rel.17 unified TCI framework, |
| • For each of PUSCH and PUCCH, the setting of (P0, alpha, closed loop index) can be associated with UL or (if applicable) joint TCI state per BWP. |
| ▪ In this case, multiple settings are configured. Each setting can be associated with at least one TCI state, and, for a given TCI state, only one setting for PUSCH and only one setting for PUCCH can be associated at a time. |
| ▪ (Working Assumption) In this case, for each of the PUSCH and PUCCH, each of the activated UL or (if applicable) joint TCI states is associated with one of the settings. |
| • If not associated, for each of the PUSCH and PUCCH, the setting(s) of (P0, alpha, closed loop index) per channel/signal per BWP is independent of the UL or (if applicable) joint TCI states |
| • FFS: If the setting of (P0, alpha, closed loop index) for SRS can also be associated with UL or (if applicable) joint TCI state. |
| • FFS: (to be decided in RAN1#106-e) whether to configure the same setting of (P0, alpha, closed loop index) per TCI state across channels and apply a channel dependent component, or configure a channel dependent setting of (P0, alpha, closed loop index) per TCI state |

| Agreement |
| --- |
| On the setting of UL PC parameters except for PL-RS (P0, alpha, closed loop index) for Rel.17 unified TCI framework, the setting of (P0, alpha, closed loop index) for SRS can also be associated with UL or (if applicable) joint TCI state. |
| • If not associated, the setting(s) of (P0, alpha, closed loop index) for SRS per BWP is independent of the UL or (if applicable) joint TCI states |
| • This is only applicable for SRS sets using Rel-17 TCI state to determine their spatial relation. |
| FFS: Whether more than one parameter sets can be configured, e.g. for different traffics |

| Conclusion |
| --- |
| On the setting of UL PC parameters except for PL-RS (P0, alpha, closed loop index) for Rel.17 unified TCI framework, there is no consensus in configuring the same setting of (P0, alpha, closed loop index) per TCI state across channels and apply a channel dependent component |
| • Note: It has been agreed that "The setting of (P0, alpha, closed loop index) is at least associated with UL channel or UL RS" and hence the setting of (P0, alpha, closed loop index) is channel/signal dependent (separate settings for PUCCH, PUSCH, and SRS) |

| Agreement |
| --- |
| On Rel.17 unified TCI framework, for the case when the settings of (P0, alpha, closed loop index) for PUSCH, PUCCH, and/or SRS are associated with UL or (if applicable) joint TCI states per BWP, for each of the PUSCH, PUCCH, and/or SRS, one individual setting is optionally associated with each of the UL or (if applicable) joint TCI states in a BWP via RRC |
| • FFS: MAC-CE based update for the closed loop index associated with UL or (if applicable) joint TCI state |
| • Above is applicable for eMBB |

(continued)

| Agreement |
|---|
| ◦ FFS : Details on power control setting for URLLC |

In the above, a pathloss reference RS (hereinafter referred to as PL-RS) has been standardized so that it is associated with or included in the joint TCI state and/or UL TCI state (association/including is determined in the RAN2). Further, the power control parameters (P0, alpha, closed-loop index) other than the PL-RS have been standardized so that they are associated with the joint TCI state and/or the UL TCI state. That is, due to the Rel-17 MIMO standardization, the base station may configure/indicate the UL Tx beam for a specific target DL/UL channel/RS of the UE through the joint and/or separate UL TCI states and also configure/indicate the power control parameters required for determining the transmission power.

AI/ML for wireless communication

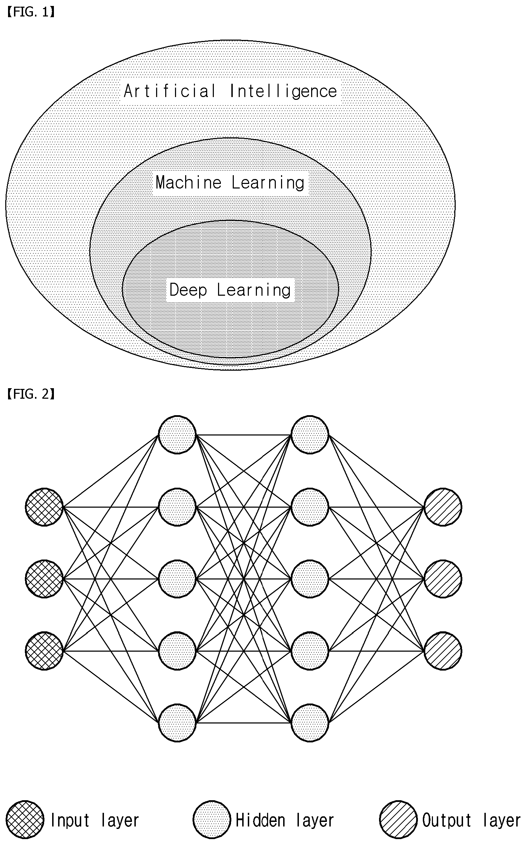

FIG. 1 illustrates an example of a concept related to deep learning based artificial intelligence (AI) in a system applicable to the present disclosure.

With the technological advancement of artificial intelligence/machine learning (AI/ML), node(s) and UE(s) constituting a wireless communication network are becoming more intelligent/advanced. In particular, due to the intelligence of networks/base stations, it is expected that various network/base station decision parameter values (e.g., transmission/reception power of each BS, transmission power of each UE, precoder/beam of BS/UE, time/-frequency resource allocation for each UE, duplex method of each BS, etc.) can be quickly optimized and derived/applied based on various environmental parameters (e.g., distribution/location of base stations, distribution/location/material of buildings/furniture, etc., location/movement direction/speed of UEs, climate information, etc.). In line with this trend, many standardization organizations (e.g., 3GPP, O-RAN) are considering introduction, and studies on this are also actively underway.

AI/ML may be easily referred to as artificial intelligence based on deep learning in a narrow sense, but conceptually, it is as shown in table below.

(1) Artificial Intelligence (AI): it is any automation that allows machines to do the work that people would otherwise do.
(2) Machine Learning (ML): it refers to a technology in which machines learn patterns for decision-making from data on their own without explicitly programming rules.
(3) Deep Learning: it is an artificial neural network-based model, and allows machines to perform feature extraction and decision from unstructured data at once. This algorithm depends on a multilayer network consisting of interconnected nodes for feature extraction and transformation, inspired by biological nervous systems, i.e., neural networks. A common deep learning network architecture includes deep neural network (DNN), recurrent neural network (RNN), and convolutional neural network (CNN).

Types of AI/ML based on various criteria

(1) Offline vs Online

(1-1) Offline Learning
(1-1-1) Offline learning faithfully follows a sequential procedure of database collection, learning, and prediction. That is, the collection and learning may be performed offline, and the completed program may be installed in the field and used for prediction work. In most situations, such offline learning methods are used.
(1-2) Online Learning
(1-2-1) Online learning refers to a method of gradually improving performance by incrementally learning with additional data generated, taking advantage of the fact that data that can be used for recent learning is continuously generated via the Internet.

(2) Classification based on AI/ML Framework concept

(2-1) Centralized Learning
(2-1-1) In centralized learning, when training data collected from multiple different nodes is reported to a centralized node, all data resources/storage/learning (e.g., supervised learning, unsupervised learning, reinforcement learning, etc.) are performed in one centralized node.
(2-2) Federated Learning

(2-2-1) Federated learning is constructed based on data in which a collective model exists across individually distributed data owners. Instead of collecting data into the model, AI/ML models are imported into a data source, allowing local nodes/individual devices to collect data and train their own copies of the model, so there is no need to report source data to a centralized node. In the federated learning, parameters/weight of the AI/ML model is sent again to the centralized node to support general model training. The federated learning has advantages in terms of increase in computation speed and information security. That is, a process of uploading personal data to a central server is unnecessary, and leakage and misuse of personal information can be prevented.

(2-3) Distributed Learning

(2-3-1) Distributed learning refers to a concept that machine learning processes are scaled and distributed across a cluster of nodes. Training models are shared across multiple nodes split and operating simultaneously to speed up model training.

(3) Classification according to learning method

(3-1) Supervised Learning

(3-1-1) Supervised learning is a machine learning task that aims to learn a mapping function from input to output, given a labeled data set. The input data is called training data and has known labels or results. Examples of the supervised learning are as follows.

(3-1-1-1) Regression: Linear Regression, Logistic Regression
(3-1-1-2) Instance-based Algorithms: k-Nearest Neighbor (KNN)
(3-1-1-3) Decision Tree Algorithms: CART
(3-1-1-4) Support Vector Machines: SVM
(3-1-1-5) Bayesian Algorithms: Naive Bayes
(3-1-1-6) Ensemble Algorithms: Extreme Gradient Boosting, Bagging: Random Forest

(3-1-2) Supervised learning may be further grouped into regression and classification problems, where classification is predicting labels and regression is predicting quantities.

(3-2) Unsupervised Learning

(3-2-1) Unsupervised learning is a machine learning task that aims to learn functions that describe hidden structures in unlabeled data. The input data is not labeled and there are no known results. Some examples of unsupervised learning include K-means clustering, Principal Component Analysis (PCA), nonlinear Independent Component Analysis (ICA), and long short-term memory (LSTM).

(3-3) Reinforcement Learning

(3-3-1) In reinforcement learning (RL), an agent aims to optimize long-term goals by interacting with the environment based on a trial and error process, and is goal-oriented learning based on interaction with the environment. Examples of RL algorithm are as follows.

(3-3-1-1) Q-learning
(3-3-1-2) Multi-armed bandit learning
(3-3-1-3) Deep Q Network
(3-3-1-4) State-Action-Reward-State-Action (SARSA)
(3-3-1-5) Temporal Difference Learning
(3-3-1-6) Actor-critic reinforcement learning
(3-3-1-7) Deep deterministic policy gradient
(3-3-1-8) Monte-Carlo tree search

(3-3-2) The reinforcement learning can be additionally grouped into model-based reinforcement learning and model-free reinforcement learning.

(3-3-3) Model-based reinforcement learning: it refers to an RL algorithm that uses a predictive model, and obtains the transition probabilities between states using various dynamic states of the environment and a model in which these states lead to rewards.

(3-3-4) Model-free reinforcement learning: it refers to a RL algorithm based on value or policy that achieves the maximum future reward. Multi-agent environments/states are computationally less complex and do not require an accurate representation of the environment.

(3-3-5) RL algorithms can also be classified into value-based RL vs. policy-based RL, policy-based RL vs. non-policy RL, etc.

Representative models of deep learning include a feed-forward neural network (FFNN), a recurrent neural network (RNN), a convolution neural network (CNN), and an auto encoder.

FIG. 2 illustrates an example of a structure of a feed-forward neural network (FFNN) as an example of a deep learning model in a system applicable to the present disclosure.

1. Feed-Forward Neural Network (FFNN)

It consists of an input layer, a hidden layer, and an output layer.

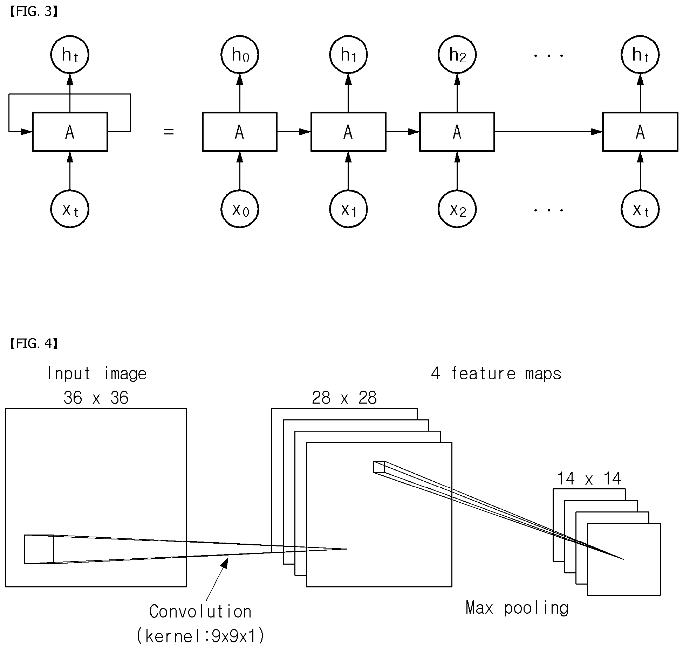

FIG. 3 illustrates an example of a structure of a recurrent neural network (RNN) as an example of a deep learning model in a system applicable to the present disclosure.

2. Recurrent Neural Network (RNN)

RNN is a type of artificial neural network in which hidden nodes are connected to directed edges to form a directed cycle. It is a model suitable for processing data that sequentially appears, such as voice and text.

One type of the RNN is a long short-term memory (LSTM), which is a structure that adds a cell-state to the hidden state of the RNN.

- Adding an input gate, a forget gate, and an output gate to an RNN cell
- Adding a cell state

FIG. 4 illustrates an example of a structure of a convolution neural network (CNN) as an example of a deep learning model in a system applicable to the present disclosure.

CNN is used for two purposes of reducing model complexity and extracting good features by applying convolution operations generally used in video processing or image processing fields.

- Kernel or filter: it refers to a unit/structure that applies weight to an input of a specific range/unit.
- Stride: it refers to a range of movement of the kernel within the input.
- Feature map: it refers to a result of applying the kernel to the input.
- Padding: it refers to a value added to adjust the size of the feature map.
- Pooling: it refers to an operation to reduce the size of the feature map by downsampling the feature map (e.g., max pooling, average pooling).

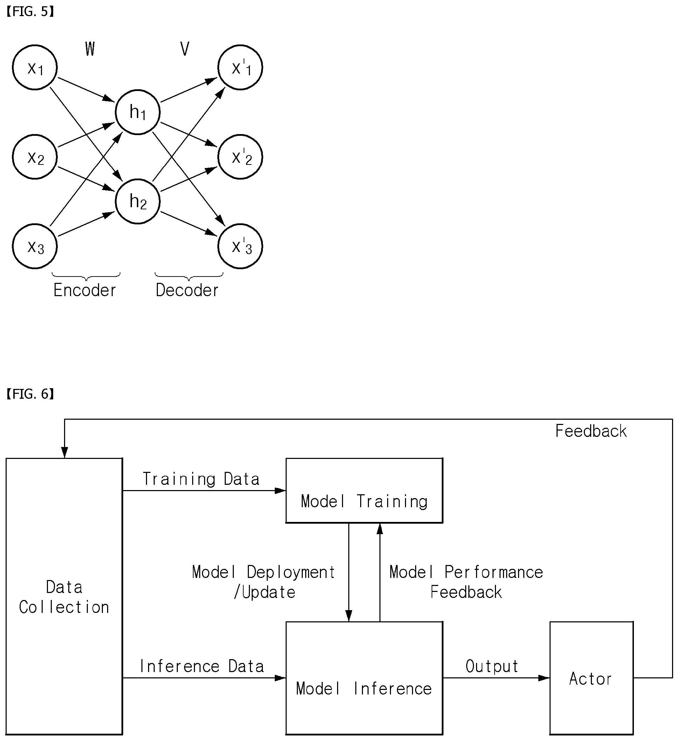

FIG. 5 illustrates an example of a structure of an auto-encoder as an example of a deep learning model in a system applicable to the present disclosure.

- Auto encoder refers to a neural network that receives a feature vector x as input and outputs the same or similar vector x'.
- An input node and an output node of the auto encoder have the same feature.
- The auto encoder is a type of unsupervised learning
- Loss function: $\arg \min_{W,V} \left\| x - g(f(x)) \right\|^2$, where $\mathbf{h} = f(\mathbf{x}) = \mathbf{Wx}, \mathbf{x'} = g(\mathbf{h}) = \mathbf{Vh}$

FIG. 6 illustrates an example of a structure of a functional framework for radio access network (RAN) intelligence in a system applicable to the present disclosure.

To explain AI/ML, the following definition can be provided, and the following definition comes from 3GPP TS37.817.

Term:

(1) Data collection: Data collected from the network nodes, management entity or UE, as a basis for ML model training, data analytics and inference.

(2) ML Model: A data driven algorithm by applying machine learning techniques that generates a set of outputs consisting of predicted information, based on a set of inputs
(3) ML Training: An online or offline process to train an ML model by learning features and patterns that best present data and get the trained ML model for inference.
(4) ML Inference: A process of using a trained ML model to make a prediction or guide the decision based on collected data and ML model.

(Term:

(1) Data collection: Data collected from the network nodes, management entity or UE, as a basis for ML model training, data analytics and inference.
(2) ML Model: A data driven algorithm by applying machine learning techniques that generates a set of outputs consisting of predicted information, based on a set of inputs
(3) ML Training: An online or offline process to train an ML model by learning features and patterns that best present data and get the trained ML model for inference.
(4) ML Inference: A process of using a trained ML model to make a prediction or guide the decision based on collected data and ML model.)

(1) Data Collection is a function that provides input data to Model training and Model inference functions. AI/ML algorithm specific data preparation (e.g., data pre-processing and cleaning, formatting, and transformation) is not carried out in the Data Collection function.

Examples of input data may include measurements from UEs or different network entities, feedback from Actor, and output from an AI/ML model.

(1-1) Training Data: Data needed as input for the AI/ML Model Training function.
(1-2) Inference Data: Data needed as input for the AI/ML Model Inference function.

((1) Data Collection is a function that provides input data to Model training and Model inference functions. AI/ML algorithm specific data preparation (e.g., data pre-processing and cleaning, formatting, and transformation) is not carried out in the Data Collection function.

Examples of input data may include measurements from UEs or different network entities, feedback from Actor, output from an AI/ML model.

(1-1) Training Data: Data needed as input for the AI/ML Model Training function.
(1-2) Inference Data: Data needed as input for the AI/ML Model Inference function.)

(2) Model Training is a function that performs the ML model training, validation, and testing which may generate model performance metrics as part of the model testing procedure. The Model Training function is also responsible for data preparation (e.g., data pre-processing and cleaning, formatting, and transformation) based on Training Data delivered by a Data Collection function, if required.
(2-1) Model Deployment/Update: Used to initially deploy a trained, validated, and tested AI/ML model to the Model Inference function or to deliver an updated model to the Model Inference function.
(2-1-1) Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study.
((2) Model Training is a function that performs the ML model training, validation, and testing which may generate model performance metrics as part of the model testing procedure. The Model Training function is also responsible for data preparation (e.g. data pre-processing and cleaning, formatting, and transformation) based on Training Data delivered by a Data Collection function, if required.
(2-1) Model Deployment/Update: Used to initially deploy a trained, validated, and tested AI/ML model to the Model Inference function or to deliver an updated model to the Model Inference function.
(2-1-1) Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study.)

(3) Model Inference is a function that provides AI/ML model inference output (e.g., predictions or decisions). Model Inference function may provide model performance feedback to Model Training function when applicable. The Model inference function is also responsible for data preparation (e.g., data pre-processing and cleaning, formatting, and transformation) based on Inference Data delivered by a Data Collection function, if required.

(3-1) Output: The inference output of the AI/ML model produced by a Model Inference function.

(3-1-1) Note: Details of inference output are use case specific.

(3-2) Model Performance Feedback: It may be used for monitoring the performance of the AI/ML model.

(3-2-1) Note: Details of the Model Performance Feedback process are out of RAN3 scope.

((3) Model Inference is a function that provides AI/ML model inference output (e.g. predictions or decisions). Model Inference function may provide model performance feedback to Model Training function when applicable. The Model inference function is also responsible for data preparation (e.g. data pre-processing and cleaning, formatting, and transformation) based on Inference Data delivered by a Data Collection function, if required.

(3-1) Output: The inference output of the AI/ML model produced by a Model Inference function.

(3-1-1) Note: Details of inference output are use case specific.

(3-2) Model Performance Feedback: It may be used for monitoring the performance of the AI/ML model.

(3-2-1) Note: Details of the Model Performance Feedback process are out of RAN3 scope.)

(4) Actor is a function that receives the output from the Model inference function and triggers or performs corresponding actions. The Actor may trigger actions directed to other entities or to itself.

(4-1) Feedback: Information that may be needed to derive training or inference data or performance feedback.

((4) Actor is a function that receives the output from the Model inference function and triggers or performs corresponding actions. The Actor may trigger actions directed to other entities or to itself.

(4-1) Feedback: Information that may be needed to derive training or inference data or performance feedback.)

Data Set

The definitions of training/validation/test in a data set used in AI/ML can be divided as follows.

(1) Training data
(1-1) Data set for training a model
(2) Validation data

(2-1) Data set for verifying a model whose training has been already completed
(2-1-1) Data set usually used to prevent over-fitting of a training data set
(2-2) Data set for selecting the best among various models trained during the training process
(2-2-1) Therefore, it can be seen as a type of training

(3) Test data
(3-1) Data set for final evaluation
(3-1-1) Independent of training

In the data set, if the training set is usually divided, the training data and the validation data within the entire training set are divided and used in a ratio of about 8:2 or 7:3, and if the test data is included, they is divided and used in a ratio of 6:2:2 (training: validation: test).

Collaboration Level

A collaboration level can be defined as follows depending on whether the AI/ML function between a base station and a UE is capable, and variations due to combination or separation of levels below are also possible.

Cat 0a) No collaboration framework: AI/ML algorithms purely implementation based and not requiring air-interface changes.

Baseline

Cat 0b) No collaboration framework with modified Air-Interface catering to efficient implementation-based AI/ML algorithms.

Cat 1) Inter-node assistance to improve the respective nodes' AI/ML algorithms. This would apply to UEs getting assistance from gNBs (for training, adaptation, etc.) and vice-versa. This level does not require model exchange between network nodes.

Cat 2) Joint ML operation between UEs and gNBs. This level requires AI/ML model instruction or exchange between network nodes.)

(Cat 0a) No collaboration framework: AI/ML algorithms purely implementation based and not requiring air-interface changes.

Baseline

Cat 0b) No collaboration framework with modified Air-Interface catering to efficient implementation-based AI/ML algorithms.

Cat 1) Inter-node assistance to improve the respective nodes' AI/ML algorithms. This would apply to UEs getting assistance from gNBs (for training, adaptation, etc.) and vice-versa. This level does not require model exchange between network nodes.

Cat 2) Joint ML operation between UEs and gNBs. This level requires AI/ML model instruction or exchange between network nodes.)

Configuration of various embodiments of the present disclosure

In 3GPP Rel-18 standardization, studies will be conducted with the aim of improving performance in communication between a base station (BS) and a user equipment (UE) using artificial intelligence (AI)/machine learning (ML). The three main use cases for evaluating performance improvement using the AI/ML have been presented to be CSI reporting, beam management, and positioning (see Rel-18 AI/ML SI objective below). In particular, in the beam management, sub-use cases are presented for beam prediction in time, and/or spatial domain for overhead and latency reduction, and beam selection accuracy improvement.

---

**WI title: Study on Artificial Intelligence (AI)/Machine Learning (ML) for NR Air Interface (NR_AIML_Air)**
OBJECTIVE

Study the 3GPP framework for AI/ML for air-interface corresponding to each target use case regarding aspects such as performance, complexity, and potential specification impact.
Use cases to focus on:
- Initial set of use cases includes:
  ◦ CSI feedback enhancement, e.g., overhead reduction, improved accuracy, prediction [RAN1]
  ◦ Beam management, e.g., beam prediction in time, and/or spatial domain for overhead and latency reduction, beam selection accuracy improvement [RAN1]
  ◦ Positioning accuracy enhancements for different scenarios including, e.g., those with heavy NLOS conditions [RAN1]
- Finalize representative sub use cases for each use case for characterization and baseline performance evaluations by RAN#98
  ◦ **The AI/ML** approaches for the selected sub use cases need to be diverse enough to support various requirements on the gNB-UE collaboration levels
Note: the selection of use cases for this study solely targets the formulation of a framework to apply AI/ML to the air-interface for these and other use cases. The selection itself does not intend to provide any indication of the prospects of any future normative project.
AI/ML model, terminology and description to identify common and specific characteristics for framework investigations:
- Characterize the defining stages of AI/ML related algorithms and associated complexity:
  ◦ Model generation, e.g., model training (including input/output, pre-/post-process, online/offline as applicable), model validation, model testing, as applicable
  ◦ Inference operation, e.g., input/output, pre-/post-process, as applicable
- Identify various levels of collaboration between UE and gNB pertinent to the selected use cases, e.g.,
  ◦ No collaboration: implementation-based only AI/ML algorithms without information exchange [for comparison purposes]
  ◦ Various levels of UE/gNB collaboration targeting at separate or joint ML operation.
- Characterize lifecycle management of AI/ML model: e.g., model training, model deployment , model inference, model monitoring, model updating

---

(continued)

| WI title: Study on Artificial Intelligence (AI)/Machine Learning (ML) for NR Air Interface (NR_AIML_Air) |
|---|
| - Dataset(s) for training, validation, testing, and inference |
| - Identify common notation and terminology for AI/ML related functions, procedures and interfaces |
| - Note: Consider the work done for *FS_NR_ENDC_data_collect* when appropriate |
| For the use cases under consideration: |
| 1) Evaluate performance benefits of AI/ML based algorithms for the agreed use cases in the final representative set: |
| ◦ Methodology based on statistical models (from TR 38.901 and TR 38.857 [positioning]), for link and system level simulations. |
| ▪ **Extensions** of 3GPP evaluation methodology for better suitability to AI/ML based techniques should be considered as needed. |
| ▪ Whether field data are optionally needed to further assess the performance and robustness in real-world environments should be discussed as part of the study. |
| ▪ Need for common assumptions in dataset construction for training, validation and test for the selected use cases. |
| ▪ Consider adequate model training strategy, collaboration levels and associated implications |
| ▪ Consider agreed-upon base AI model(s) for calibration |
| ▪ AI model description and training methodology used for evaluation should be reported for information and cross-checking purposes |
| ◦ KPIs: Determine the common KPIs and corresponding requirements for the AI/ML operations. Determine the use-case specific KPIs and benchmarks of the selected use-cases. |
| ▪ Performance, inference latency and computational complexity of AI/ML based algorithms should be compared to that of a state-of-the-art baseline |
| ▪ Overhead, power consumption (including computational), memory storage, and hardware requirements (including for given processing delays) associated with enabling respective AI/ML scheme, as well as generalization capability should be considered. |
| 2) Assess potential specification impact, specifically for the agreed use cases in the final representative set and for a common framework: |
| ◦ PHY layer aspects, e.g., (RAN1) |
| ▪ Consider aspects related to, e.g., the potential specification of the AI Model lifecycle management, and dataset construction for training, validation and test for the selected use cases |
| ▪ Use case and collaboration level specific specification impact, such as new signalling, means for training and validation data assistance, assistance information, measurement, and feedback |
| ◦ Protocol aspects, e.g., (RAN2) - RAN2 only starts the work after there is sufficient progress on the use case study in RAN1 |
| ▪ **Consider** aspects related to, e.g., capability indication, configuration and control procedures (training/inference), and management of data and AI/ML model, per RAN1 input |
| ▪ Collaboration level specific specification impact per use case |
| ◦ Interoperability and testability aspects, e.g., (RAN4) - RAN4 only starts the work after there is sufficient progress on use case study in RAN1 and RAN2 |
| ▪ Requirements and testing frameworks to validate AI/ML based performance enhancements and ensuring that UE and gNB with AI/ML meet or exceed the existing minimum requirements if applicable |
| ▪ Consider the need and implications for AI/ML processing capabilities definition |
| Note 1: specific AI/ML models are not expected to be specified and are left to implementation. User data privacy needs to be preserved. |
| Note 2: The study on AI/ML for air interface is based on the current RAN architecture and new interfaces shall not be introduced. |

To list types of the AI/ML-based operation between the base station and the UE, they may be simply divided into a BS AI/ML operation, a UE AI/ML operation, and a BS-UE joint AI/ML operation. The present disclosure describes a method for a UE to report information capable of mainly using as an input parameter of BS AI/ML in AI/ML-based beam management and a beam reporting method through UE AI/ML.

The present disclosure proposes a beam reporting operation of a UE for AI/ML-based beam management.

In the present disclosure, "/" may be interpreted as "and", "or", or "and/or" depending on the context.

Proposal 1: A UE may perform best CRI/SSBRI(s) reporting from a best beam perspective with a large slope/derivative value and/or from a beam perspective with a slope/derivative value greater than or equal to a threshold, based on a slope of L1-RSRP/SINR values (e.g., based on a derivative value per time unit of L1-RSRP/SINR values) in CRIs/SSBRIs within CSI resource config for a specific beam reporting, in addition to/separately from legacy L1-RSRP/SINR-based beam reporting. The beam reporting for the slope/derivative value may be reported to the base station as an additional payload to a legacy beam reporting instance (e.g., CRI/SSBRI + RSRP/SINR value of the CRI/SSBRI + slope/derivative value of the CRI/SSBRI), or independently reported to the base station via a separate beam reporting configuration. In addition, if the best beam is selected/reported based on the slope/derivative value, a beam with a small absolute value of RSRP/SINR but a good slope may be selected and reported. Therefore, the UE proposes a method of defining/configuring and using a metric that considers both an absolute value and a slope of L1-RSRP/SINR for a specific CRI/SSBRI (e.g., selecting a beam with a maximum value of w1*RSRP/SINR + w2*slope_RSRP/SINR). Or/and, the UE may select N1 beams based on the absolute value of RSRP/SINR and select N2 beams based on the slope to report a total of N1+N2 beam IDs and related quality information (RSRP/SINR value for N1 beams and slope/derivative value for N2 beams).

reportQuantity for the beam reporting may be newly introduced.

The slope/derivative value can be expressed as (y(t2) - y(t1)) / (t2 - t1) when the instantaneous L1-RSRP/SINR is expressed as a function with a time of y(x) as a variable.

The time unit for calculating the slope/derivative value (in the above example, t1 and t2) or/and w1/w2 in the metric for considering both the absolute value and the slope may be specified/defined in the specification or configured/indicated by the base station configuration.

The best beam reporting using the slope/derivative value may be used by the base station without any separate processing for the base station to determine the DL serving beam for the UE, or may be used as one of input parameters of an AI/ML function for future DL serving beam prediction at the base station side. That is, if the base station not having (or having) the AI/ML function configures and receives the UE beam reporting, the base station may immediately configure/indicate at least one of the reported best beams as a DL beam for DL transmission/reception because the beam reporting contains information that RSRP/SINR value of a specific beam increases. Or/and, when the base station having the AI/ML function drives the AI/ML function for the future DL serving beam prediction, the base station may apply the beam reporting information as one of the input parameters and use it for UE serving beam prediction. Afterwards, the base station may configure/indicate a DL beam for DL transmission/reception to the UE based on the predicted serving beam information.

In the beam reporting operation of the proposal 1, not the L1-RSRP/SINR value but L3 filtered RSRP value may be used. That is, the UE may perform the best beam reporting on beams with a good tendency (e.g., slope/derivative value) of RSRP values filtered in L3. Layer 3 filtering in higher layer is performed by a procedure shown in table below. In the formula below, value of 'a' is configured by base station RRC configuration. As an additional embodiment, the present invention proposes a method of performing L3 filtering for beam measurement quantity through base station AI/ML or/and UE AI/ML. The base station may configure an optimal value of 'a' to the UE through the AI/ML, or/and the UE may calculate and configure/apply a filter output (using the beam measurement(s) as the input parameter) for a specific beam measurement quantity through the AI/ML function, not performing L3 filtering using the formula below.

---

5.5.3.2 Layer 3 filtering

The UE shall:

1> for each cell measurement quantity, each beam measurement quantity, each sidelink measurement quantity as needed in sub-clause 5.8.10, and for each CLI measurement quantity that the UE performs measurements according to 5.5.3.1:

1. 2> filter the measured result, before using for evaluation of reporting criteria or for measurement reporting, by the following formula:

$$F_n = (1 - a)*F_{n-1} + a*M_n$$

2. where

$M_n$ is the latest received measurement result from the physical layer;

$F_n$ is the updated filtered measurement result, that is used for evaluation of reporting criteria or for measurement reporting;

---

(continued)

$F_{n-I}$ is the old filtered measurement result, where $F_0$ is set to $M_1$ when the first measurement result from the physical layer is received; and for *MeasObjectNR*, $a$ = $1/2^{(ki/4)}$, where $k_i$ is the *filterCoefficient* for the corresponding measurement quantity of the i:th *QuantityConfigNR* in *quantityConfigNR-List,* and *i* is indicated by *quantityConfigIndex* in *MeasObjectNR;* for other measurements, $a$ = $1/2^{(k/4)}$, where $k$ is the *filterCoefficient* for the corresponding measurement quantity received by the *quantityConfig,* for UTRA-FDD, a = $1/2^{(k/4)}$, where k is the filterCoefficient for the corresponding measurement quantity received by *quantityConfigUTRA-FDD* in the *QuantityConfig,*

3. 2> adapt the filter such that the time characteristics of the filter are preserved at different input rates, observing that the *filterCoefficient k* assumes a sample rate equal to X ms; The value of X is equivalent to one intra-frequency L1 measurement period as defined in TS 38.133 [14] assuming non-DRX operation, and depends on frequency range.

NOTE 1: If $k$ is set to 0, no layer 3 filtering is applicable.

NOTE 2: The filtering is performed in the same domain as used for evaluation of reporting criteria or for measurement reporting, i.e., logarithmic filtering for logarithmic measurements.

NOTE 3: The filter input rate is implementation dependent, to fulfil the performance requirements set in TS 38.133 [14]. For further details about the physical layer measurements, see TS 38.133 [14].

NOTE 4: For CLI-RSSI measurement, it is up to UE implementation whether to reset filtering upon BWP switch.

Proposal 2. A UE may perform best beam reporting for specific time instance(s) in the past or/and future time instance(s), in addition to/separately from legacy L1-RSRP/SINR-based beam reporting. That is, the UE device can report best CRI/SSBRI(s) and L1-RSRP/SINR values for each time stamp when reporting CRI/SSBRI and L1-RSRP/SINR values in a beam reporting payload. E.g., ... t-2: CRI1, -76 dBm, t-1: CRI1, -68 dBm, t: CRI3, -70 dBm, t+1: CRI3, -72 dBm, t+2: CRI3, -66 dBm, .... In the above reporting, when the beam reporting is performed on multiple CRIs/SSBRIs for each time stamp, RSRP(/SINR) value of the best CRI/SSBRI of each time stamp may be represented by 7-bit value in the range [-140, -44](/[-23, 40]) dBm with 1(/0.5)dB step size, and RSRP(/SINR) value of the remaining CRIs/SSBRIs may be represented by computed with 2 dB(/1 dB) step size with a reference to the largest measured L1-RSRP(/SINR) value which is part of the same L1-RSRP(/SINR) reporting instance. For another example, in addition to the method of reporting the measurement/prediction value with the time stamp, the UE may report a change amount for the measurement/prediction value in the form of a function. For example, the UE may use a tailor series to express and calculate a value of change amount at a specific 't' as y(t) = f(t0) + f(t0)'*(t-t0) + 0.5*f(t0)''*(t-t0)^2... and may report beams with the best change amount. Here, f(a) may be a function of the change amount. In addition to the reporting, the UE may report coefficients of the 0th, 1st, 2nd order ... (if needed) used to measure a change amount at a specific reference time (t0).

For another example, in addition to the method of reporting the measurement/prediction value with the time stamp, the UE may report a change amount for the measurement/prediction value in the form of a function. For example, the UE may use a tailor series to express and calculate a value of change amount at a specific 't' as y(t) = f(t0) + f(t0)'*(t-t0) + 0.5*f(t0)''*(t-t0)^2...and may report beams with the best change amount. Here, f(a) may be a function of the change amount. In addition to the reporting, the UE may report one or more coefficients of the 0th, 1st, 2nd order ... (if needed) used to measure a change amount at a specific reference time (t0). That is, the UE may report one or more coefficients within a polynomial to express the change amount/change rate.

In the beam reporting of the proposal 2, the time unit between the time stamps and the number of time stamps to be reported may be specified/defined in the specification or configured/indicated by the base station configuration.

In the beam reporting of the proposal 2, in the best beam report for instance(s) at a future point in time, the best beam may be determined based on the RSRP/SINR tendency measured at the UE as described in the proposal 1, or determined based on UE AI/ML calculation if there is an AI/ML function at the UE side.

The best beam reporting for each time stamp in the proposal 2 may be used by the base station without any separate processing for the base station to determine the DL serving beam for the UE, or may be used as one of input parameters of an AI/ML function for future DL serving beam prediction at the base station side.

At least one combination of embodiments of the proposals 1 and 2 can be used for the operation between the base station and the UE.

Signaling procedure of various embodiments of the present disclosure

An example of a UE (or base station) operation based on at least one of the above-described embodiments (e.g., at least one of the proposals 1 and 2) is as follows.

1) Reception (transmission) of configuration information related to beam measurement and reporting

The configuration information may be based on the proposals 1 and 2.

2) Reception (transmission) and quality measurement of candidate beams based on beam configuration
3) The UE transmits (receives) beam reporting for a best beam based on the reception/measurement for candidate beams.

The best beam measurement/determination may be based on the proposals 1 and 2.

The UE/BS operation is merely an example, and each operation (and step) is not necessarily essential. For example, operation related to beam measurement and reporting of the UE according to the above-described embodiments may be omitted or added based on a UE/BS implementation method.

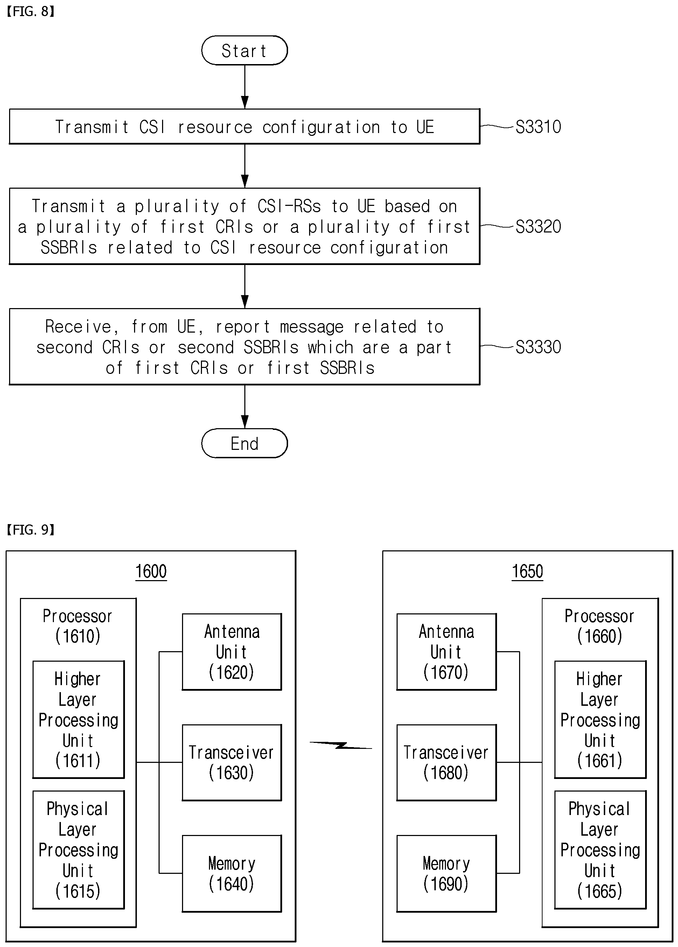

From an implementation perspective, operations of the UE/BS according to the above-described embodiments (e.g., operations related to beam measurement and reporting of the UE based on at least one of the proposals 1 and 2) can be processed by a device (e.g., processors 1610 and 1660 of FIG. 9) of FIG. 9 to be described below.

Further, the operations of the UE/BS according to the above-described embodiments (e.g., operations related to beam measurement and reporting of the UE based on at least one of the proposals 1 and 2) can be stored in a memory (e.g., memories 1640 and 1690 of FIG. 9) in the form of commands/programs (e.g., instructions, executable codes) for running at least one processor (e.g., processors 1610 and 1660 of FIG. 9).

[Description of claims related to UE]

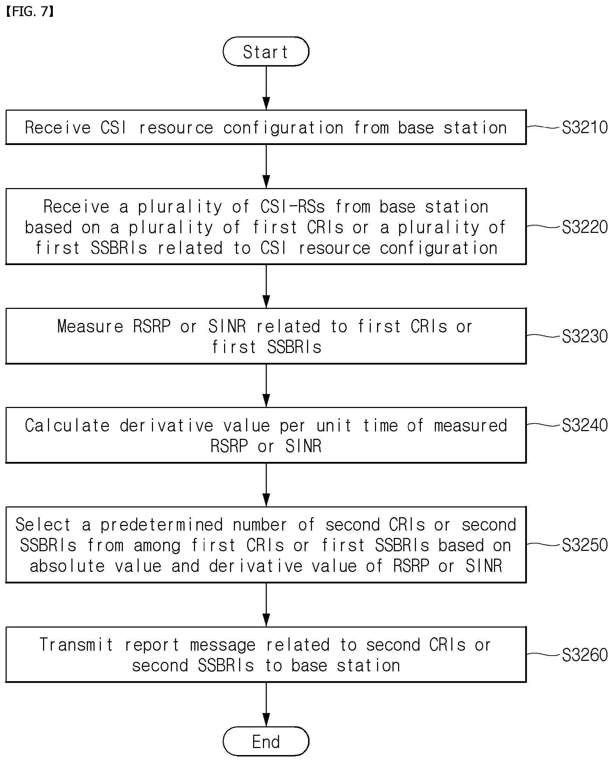

Below, the above-described embodiments are described in detail from a perspective of an operation of a UE with reference to FIG. 7. Methods to be described below are merely distinguished for convenience of explanation. Thus, as long as the methods are not mutually exclusive, it is obvious that partial configuration of any method can be substituted or combined with partial configuration of another method.

FIG. 7 illustrates an example of an operation process of a UE in a system applicable to the present disclosure.

In step S3210, a UE receives a channel state information (CSI) resource configuration from a base station.

In step S3220, the UE receives a plurality of CSI-reference signals (RSs) from the base station based on a plurality of first CSI-reference signal resource indicators (CRIs) or a plurality of first synchronization signal block resource indicators (SSBRIs) related to the CSI resource configuration.

In step S3230, the UE measures a received signal received power (RSRP) or a signal to interference power (SINR) related to the first CRIs or the first SSBRIs.

In step S3240, the UE calculates a derivative value per time unit of the measured RSRP or SINR.

In step S3250, the UE selects a predetermined number of second CRIs or second SSBRIs from among the first CRIs or the first SSBRIs based on an absolute value and the derivative value of the RSRP or the SINR.

In step S3260, the UE transmits, to the base station, a report message related to the second CRIs or the second SSBRIs.

According to various embodiments of the present disclosure, the report message may include the absolute value of the RSRP or the SINR related to the second CRIs or the second SSBRIs and the derivative value of the RSRP or the SINR related to the second CRIs or the second SSBRIs.

According to various embodiments of the present disclosure, the report message may include a first report configuration based on the absolute value of the RSRP or the SINR related to the second CRIs or the second SSBRIs and a second report configuration based on the derivative value of the RSRP or the SINR related to the second CRIs or the second SSBRIs.

According to various embodiments of the present disclosure, the second report configuration may be transmitted together with the first report configuration as an additional payload of the first report configuration. Alternatively, the second report configuration may be configured separately from the first report configuration and transmitted separately from the first report configuration.

According to various embodiments of the present disclosure, the second CRIs or the second SSBRIs may include (N1+N2) CRIs or (N1+N2) SSBRIs.

According to various embodiments of the present disclosure, N1 CRIs or N1 SSBRIs among the second CRIs or the second SSBRIs may be CRIs or SSBRIs determined based on the absolute value of the RSRP or the SINR among the plurality of first CRIs or first SSBRIs.

According to various embodiments of the present disclosure, N2 CRIs or N2 SSBRIs among the second CRIs or the second SSBRIs may be CRIs or SSBRIs determined based on the derivative value of the RSRP or the SINR among the plurality of first CRIs or first SSBRIs.

According to various embodiments of the present disclosure, the report message may be based on a metric based on both the absolute value and the derivative value of the RSRP or the SINR.

According to various embodiments of the present disclosure, the second CRIs or the second SSBRIs may be a predetermined number of CRIs or SSBRIs with a highest value based on the metric among the first CRIs or the first SSBRIs.

According to various embodiments of the present disclosure, the report message may include an optimal second CRI or second SSBRI for each time stamp, and the RSRP or the SINR related to the optimal second CRI or second SSBRI per time.

According to various embodiments of the present disclosure, the report message may include a report on an optimal CRI or SSBRI for a specific time in the past or future based on the second CRIs or the second SSBRIs or a prediction of the optimal CRI or SSBRI.

According to various embodiments of the present disclosure, the report message may be expressed in the form of a rate of change value at a specific time for one or more of the absolute value of the RSRP or the SINR related to the second CRIs or the second SSBRIs or the derivative of the RSRP or the SINR related to the second CRIs or the second SSBRIs.

According to various embodiments of the present disclosure, the report message may include information on CRIs or SSBRIs with a best change rate based on the rate of change value.

According to various embodiments of the present disclosure, the rate of change value at the specific time may be calculated by a polynomial based on a variable at the specific time.

According to various embodiments of the present disclosure, the report message may include information on one or more coefficients included in the polynomial.

According to various embodiments of the present disclosure, there is provided a user equipment (UE) in a wireless communication system. The UE may include a transceiver and at least one processor, and the at least one processor may be configured to perform the operation method of the UE based on FIG. 7.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 7 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 7.

[Description of claims related to BS]

Below, the above-described embodiments are described in detail from a perspective of an operation of a base station with reference to FIG. 8. Methods to be described below are merely distinguished for convenience of explanation. Thus, as long as the methods are not mutually exclusive, it is obvious that partial configuration of any method can be substituted or combined with partial configuration of another method.

FIG. 8 illustrates an example of an operation process of a base station in a system applicable to the present disclosure.

In step S3310, a base station transmits a channel state information (CSI) resource configuration to a UE.

In step S3320, the base station transmits a plurality of CSI-reference signals (RSs) to the UE based on a plurality of first CSI-reference signal resource indicators (CRIs) or a plurality of first synchronization signal block resource indicators (SSBRIs) related to the CSI resource configuration.

In step S3330, the base station receives, from the UE, a report message related to second CRIs or second SSBRIs which are a part of the first CRIs or the first SSBRIs.

According to various embodiments of the present disclosure, the second CRIs or the second SSBRIs may be a predetermined number of CRIs or SSBRIs selected based on an absolute value of a received signal received power (RSRP) or a signal to interference power (SINR) related to the first CRIs or the first SSBRIs and a derivative value per time unit of the RSRP or the SINR related to the first CRIs or the first SSBRIs from among the first CRIs or the first SSBRIs.

According to various embodiments of the present disclosure, the report message may include the absolute value of the RSRP or the SINR related to the second CRIs or the second SSBRIs and the derivative value of the RSRP or the SINR related to the second CRIs or the second SSBRIs.

According to various embodiments of the present disclosure, the report message may include a first report configuration based on the absolute value of the RSRP or the SINR related to the second CRIs or the second SSBRIs and a second report configuration based on the derivative value of the RSRP or the SINR related to the second CRIs or the second SSBRIs.

According to various embodiments of the present disclosure, the second report configuration may be received together with the first report configuration as an additional payload of the first report configuration. Alternatively, the second report configuration may be configured separately from the first report configuration and received separately from the first report configuration.

According to various embodiments of the present disclosure, the second CRIs or the second SSBRIs may include (N1+N2) CRIs or (N1+N2) SSBRIs.

According to various embodiments of the present disclosure, N1 CRIs or N1 SSBRIs among the second CRIs or the second SSBRIs may be CRIs or SSBRIs determined based on the absolute value of the RSRP or the SINR among the plurality of first CRIs or first SSBRIs.

According to various embodiments of the present disclosure, N2 CRIs or N2 SSBRIs among the second CRIs or the second SSBRIs may be CRIs or SSBRIs determined based on the derivative value of the RSRP or the SINR among the plurality of first CRIs or first SSBRIs.

According to various embodiments of the present disclosure, the report message may be based on a metric based on both the absolute value and the derivative value of the RSRP or the SINR.

According to various embodiments of the present disclosure, the second CRIs or the second SSBRIs may be a predetermined number of CRIs or SSBRIs with a highest value based on the metric among the first CRIs or the first SSBRIs.

According to various embodiments of the present disclosure, the report message may include an optimal second CRI or second SSBRI for each time stamp, and the RSRP or the SINR related to the optimal second CRI or second SSBRI per time.

According to various embodiments of the present disclosure, the report message may include a report on an optimal CRI or SSBRI for a specific time in the past or future based on the second CRIs or the second SSBRIs or a prediction of the optimal CRI or SSBRI.

According to various embodiments of the present disclosure, the report message may be expressed in the form of a rate of change value at a specific time for one or more of the absolute value of the RSRP or the SINR related to the second CRIs or the second SSBRIs or the derivative of the RSRP or the SINR related to the second CRIs or the second SSBRIs.

According to various embodiments of the present disclosure, the report message may include information on CRIs or SSBRIs with a best change rate based on the rate of change value.

According to various embodiments of the present disclosure, the rate of change value at the specific time may be calculated by a polynomial based on a variable at the specific time.

According to various embodiments of the present disclosure, the report message may include information on one or more coefficients included in the polynomial.

According to various embodiments of the present disclosure, there is provided a base station in a wireless communication system. The base station may include a transceiver and at least one processor, and the at least one processor may be configured to perform the operation method of the BS based on FIG. 8.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 8 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 8.

Wireless device applicable to the present disclosure

Examples of wireless devices to which various embodiments of the present disclosure are applied are described below.

FIG. 9 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

The wireless communication technology implemented in the devices 1600 and 1650 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 1600 and 1650 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 1600 and 1650 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

**Claims**

1. A method of operating a user equipment (UE) in a wireless communication system, the method comprising:

receiving a channel state information (CSI) resource configuration from a base station;
receiving a plurality of CSI-reference signals (RSs) from the base station based on a plurality of first CSI-reference signal resource indicators (CRIs) or a plurality of first synchronization signal block resource indicators (SSBRIs) related to the CSI resource configuration;
measuring a received signal received power (RSRP) or a signal to interference power (SINR) related to the first CRIs or the first SSBRIs;
calculating a derivative value per time unit of the measured RSRP or SINR;
selecting a predetermined number of second CRIs or second SSBRIs from among the first CRIs or the first SSBRIs based on an absolute value and the derivative value of the RSRP or the SINR; and
transmitting, to the base station, a report message related to the second CRIs or the second SSBRIs,
wherein the report message includes the absolute value of the RSRP or the SINR related to the second CRIs or the second SSBRIs and the derivative value of the RSRP or the SINR related to the second CRIs or the second SSBRIs.

2. The method of claim 1, wherein the report message includes a first report configuration based on the absolute value of the RSRP or the SINR related to the second CRIs or the second SSBRIs and a second report configuration based on the derivative value of the RSRP or the SINR related to the second CRIs or the second SSBRIs,

wherein the second report configuration is transmitted together with the first report configuration as an additional payload of the first report configuration, or
wherein the second report configuration is configured separately from the first report configuration and is transmitted separately from the first report configuration.

3. The method of claim 1, wherein the second CRIs or the second SSBRIs include (N1+N2) CRIs or (N1+N2) SSBRIs,

wherein N1 CRIs or N1 SSBRIs among the second CRIs or the second SSBRIs are CRIs or SSBRIs determined based on the absolute value of the RSRP or the SINR among the plurality of first CRIs or first SSBRIs, and
wherein N2 CRIs or N2 SSBRIs among the second CRIs or the second SSBRIs are CRIs or SSBRIs determined based on the derivative value of the RSRP or the SINR among the plurality of first CRIs or first SSBRIs.

4. The method of claim 1, wherein the report message is based on a metric based on both the absolute value and the derivative value of the RSRP or the SINR, and
wherein the second CRIs or the second SSBRIs are a predetermined number of CRIs or SSBRIs with a highest value based on the metric among the first CRIs or the first SSBRIs.

5. The method of claim 1, wherein the report message includes an optimal second CRI or second SSBRI for each time stamp, and the RSRP or the SINR related to the optimal second CRI or second SSBRI per time, and
wherein the report message further includes a report on an optimal CRI or SSBRI for a specific time in past or future based on the second CRIs or the second SSBRIs or a prediction of the optimal CRI or SSBRI.

6. The method of claim 1, wherein the report message is expressed in a form of a rate of change value at a specific time for one or more of the absolute value of the RSRP or the SINR related to the second CRIs or the second SSBRIs or the derivative of the RSRP or the SINR related to the second CRIs or the second SSBRIs, and
wherein the report message includes information on CRIs or SSBRIs with a best change rate based on the rate of change value.

7. The method of claim 6, wherein the rate of change value at the specific time is calculated by a polynomial based on a variable at the specific time, and
wherein the report message includes information on one or more coefficients included in the polynomial.

8. A method of operating a base station in a wireless communication system, the method comprising:

transmitting a channel state information (CSI) resource configuration to a user equipment (UE);
transmitting a plurality of CSI-reference signals (RSs) to the UE based on a plurality of first CSI-reference signal resource indicators (CRIs) or a plurality of first synchronization signal block resource indicators (SSBRIs) related to the CSI resource configuration; and

receiving, from the UE, a report message related to second CRIs or second SSBRIs which are a part of the first CRIs or the first SSBRIs,

wherein the second CRIs or the second SSBRIs are a predetermined number of CRIs or SSBRIs selected based on an absolute value of a received signal received power (RSRP) or a signal to interference power (SINR) related to the first CRIs or the first SSBRIs and a derivative value per time unit of the RSRP or the SINR related to the first CRIs or the first SSBRIs from among the first CRIs or the first SSBRIs, and

wherein the report message includes the absolute value of the RSRP or the SINR related to the second CRIs or the second SSBRIs and the derivative value of the RSRP or the SINR related to the second CRIs or the second SSBRIs.

9. The method of claim 8, wherein the report message includes a first report configuration based on the absolute value of the RSRP or the SINR related to the second CRIs or the second SSBRIs and a second report configuration based on the derivative value of the RSRP or the SINR related to the second CRIs or the second SSBRIs,

wherein the second report configuration is received together with the first report configuration as an additional payload of the first report configuration, or
wherein the second report configuration is configured separately from the first report configuration and is received separately from the first report configuration.

10. The method of claim 8, wherein the second CRIs or the second SSBRIs include (N1+N2) CRIs or (N1+N2) SSBRIs,

wherein N1 CRIs or N1 SSBRIs among the second CRIs or the second SSBRIs are CRIs or SSBRIs determined based on the absolute value of the RSRP or the SINR among the plurality of first CRIs or first SSBRIs, and
wherein N2 CRIs or N2 SSBRIs among the second CRIs or the second SSBRIs are CRIs or SSBRIs determined based on the derivative value of the RSRP or the SINR among the plurality of first CRIs or first SSBRIs.

11. The method of claim 8, wherein the report message is based on a metric based on both the absolute value and the derivative value of the RSRP or the SINR, and
wherein the second CRIs or the second SSBRIs are a predetermined number of CRIs or SSBRIs with a highest value based on the metric among the first CRIs or the first SSBRIs.

12. The method of claim 8, wherein the report message includes an optimal second CRI or second SSBRI for each time stamp, and the RSRP or the SINR related to the optimal second CRI or second SSBRI per time, and
wherein the report message further includes a report on an optimal CRI or SSBRI for a specific time in past or future based on the second CRIs or the second SSBRIs or a prediction of the optimal CRI or SSBRI.

13. The method of claim 8, wherein the report message is expressed in a form of a rate of change value at a specific time for one or more of the absolute value of the RSRP or the SINR related to the second CRIs or the second SSBRIs or the derivative of the RSRP or the SINR related to the second CRIs or the second SSBRIs, and
wherein the report message includes information on CRIs or SSBRIs with a best change rate based on the rate of change value.

14. The method of claim 13, wherein the rate of change value at the specific time is calculated by a polynomial based on a variable at the specific time, and
wherein the report message includes information on one or more coefficients included in the polynomial.

15. A user equipment (UE) in a wireless communication system, the UE comprising:

a transceiver;
at least one processor; and
at least one memory operably connectable to the at least one processor and configured to store instructions performing operations based on being executed by the at least one processor,
wherein the operations comprise all steps of a method according to any one of claims 1 to 7.

16. A base station in a wireless communication system, the base station comprising:

a transceiver;

at least one processor; and

at least one memory operably connectable to the at least one processor and configured to store instructions performing operations based on being executed by the at least one processor,

wherein the operations comprise all steps of a method according to any one of claims 8 to 14.

17. A control device controlling a user equipment in a wireless communication system, the control device comprising:

at least one processor; and

at least one memory operably connected to the at least one processor,

wherein the at least one memory is configured to store instructions performing operations based on being executed by the at least one processor, and

wherein the operations comprise all steps of a method according to any one of claims 1 to 7.

18. A control device controlling a base station in a wireless communication system, the control device comprising:

at least one processor; and

at least one memory operably connected to the at least one processor,

wherein the at least one memory is configured to store instructions performing operations based on being executed by the at least one processor, and

wherein the operations comprise all steps of a method according to any one of claims 8 to 14.

19. One or more non-transitory computer readable mediums storing one or more instructions,

wherein the one or more instructions are configured to perform operations based on being executed by one or more processors, and

wherein the operations comprise all steps of a method according to any one of claims 1 to 7.

20. One or more non-transitory computer readable mediums storing one or more instructions,

wherein the one or more instructions are configured to perform operations based on being executed by one or more processors, and

wherein the operations comprise all steps of a method according to any one of claims 8 to 14.

【FIG. 1】

【FIG. 2】

Input layer　Hidden layer　Output layer

【FIG. 3】

【FIG. 4】

Input image
36 x 36

4 feature maps

28 x 28

14 x 14

Convolution
(kernel:9x9x1)

Max pooling

【FIG. 5】

W        V

Encoder    Decoder

【FIG. 6】

【FIG. 7】

Start

Receive CSI resource configuration from base station — S3210

Receive a plurality of CSI-RSs from base station based on a plurality of first CRIs or a plurality of first SSBRIs related to CSI resource configuration — S3220

Measure RSRP or SINR related to first CRIs or first SSBRIs — S3230

Calculate derivative value per unit time of measured RSRP or SINR — S3240

Select a predetermined number of second CRIs or second SSBRIs from among first CRIs or first SSBRIs based on absolute value and derivative value of RSRP or SINR — S3250

Transmit report message related to second CRIs or second SSBRIs to base station — S3260

End

【FIG. 8】

```
                    ( Start )
                        |
                        v
  +------------------------------------------------+
  | Transmit CSI resource configuration to UE      |---- S3310
  +------------------------------------------------+
                        |
                        v
  +------------------------------------------------+
  | Transmit a plurality of CSI-RSs to UE based on |
  | a plurality of first CRIs or a plurality of first |---- S3320
  | SSBRIs related to CSI resource configuration   |
  +------------------------------------------------+
                        |
                        v
  +------------------------------------------------+
  | Receive, from UE, report message related to    |
  | second CRIs or second SSBRIs which are a part  |---- S3330
  | of first CRIs or first SSBRIs                  |
  +------------------------------------------------+
                        |
                        v
                     ( End )
```

【FIG. 9】

## INTERNATIONAL SEARCH REPORT

| International application No. |
| --- |
| **PCT/KR2023/005695** |

### A. CLASSIFICATION OF SUBJECT MATTER

**H04B 7/06**(2006.01)i; **H04B 7/0408**(2017.01)i; **H04B 7/0417**(2017.01)i; **H04B 17/318**(2015.01)i; **H04B 17/336**(2015.01)i; **H04W 24/10**(2009.01)i; **G06N 3/04**(2006.01)i; **G06N 20/00**(2019.01)i

According to International Patent Classification (IPC) or to both national classification and IPC

### B. FIELDS SEARCHED

Minimum documentation searched (classification system followed by classification symbols)

H04B 7/06(2006.01); H04L 25/02(2006.01); H04W 52/02(2009.01); H04W 56/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), CRI(CSI-RS resource indicator), SSBRI(SSB resource indicator), 선택(selection), RSRP(received signal received power), SINR(signal to interference ratio), 미분값(slope value), 절대값(absolute value)

### C. DOCUMENTS CONSIDERED TO BE RELEVANT

| Category* | Citation of document, with indication, where appropriate, of the relevant passages | Relevant to claim No. |
| --- | --- | --- |
| A | US 2021-0351959 A1 (ZTE CORPORATION) 11 November 2021 (2021-11-11)<br>See paragraphs [0032]-[0047], [0087]-[0091] and [0096]; and figures 10 and 12. | 1-20 |
| A | WO 2020-215106 A2 (FUTUREWEI TECHNOLOGIES, INC.) 22 October 2020 (2020-10-22)<br>See page 13, lines 8-26 and page 26, lines 24-26. | 1-20 |
| A | WO 2022-069341 A1 (NOKIA TECHNOLOGIES OY) 07 April 2022 (2022-04-07)<br>See paragraphs [0068]-[0123]; and figures 3-8B. | 1-20 |
| A | US 2022-0095254 A1 (SAMSUNG ELECTRONICS CO., LTD.) 24 March 2022 (2022-03-24)<br>See paragraphs [0091]-[0140]; and figures 8-14. | 1-20 |
| A | US 2019-0253964 A1 (MEDIATEK INC.) 15 August 2019 (2019-08-15)<br>See paragraphs [0063]-[0097]; and figures 7-14. | 1-20 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 July 2023** | **18 July 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/005695**

| Patent document cited in search report | | | Publication date (day/month/year) | Patent family member(s) | | | Publication date (day/month/year) |
|---|---|---|---|---|---|---|---|
| US | 2021-0351959 | A1 | 11 November 2021 | CA | 3127834 | A1 | 20 February 2020 |
| | | | | CN | 113348711 | A | 03 September 2021 |
| | | | | CN | 113348711 | B | 13 January 2023 |
| | | | | CN | 116133141 | A | 16 May 2023 |
| | | | | EP | 3915312 | A1 | 01 December 2021 |
| | | | | EP | 3915312 | A4 | 23 February 2022 |
| | | | | JP | 2022-523487 | A | 25 April 2022 |
| | | | | KR | 10-2021-0120046 | A | 06 October 2021 |
| | | | | WO | 2020-034592 | A1 | 20 February 2020 |
| WO | 2020-215106 | A2 | 22 October 2020 | US | 2022-0256387 | A1 | 11 August 2022 |
| | | | | WO | 2020-215106 | A3 | 24 December 2020 |
| WO | 2022-069341 | A1 | 07 April 2022 | CN | 116210168 | A | 02 June 2023 |
| US | 2022-0095254 | A1 | 24 March 2022 | KR | 10-2023-0073205 | A | 25 May 2023 |
| | | | | WO | 2022-065840 | A1 | 31 March 2022 |
| US | 2019-0253964 | A1 | 15 August 2019 | CN | 110383875 | A | 25 October 2019 |
| | | | | CN | 110383875 | B | 28 May 2021 |
| | | | | CN | 110383934 | A | 25 October 2019 |
| | | | | TW | 201935944 | A | 01 September 2019 |
| | | | | TW | 201935966 | A | 01 September 2019 |
| | | | | TW | I722385 | B | 21 March 2021 |
| | | | | US | 10863433 | B2 | 08 December 2020 |
| | | | | US | 2019-0254051 | A1 | 15 August 2019 |
| | | | | WO | 2019-158062 | A1 | 22 August 2019 |
| | | | | WO | 2019-158079 | A1 | 22 August 2019 |

Form PCT/ISA/210 (patent family annex) (July 2022)